# EUROPEAN PATENT SPECIFICATION

(11) **EP 4 169 744 B1**
(45) Date of publication and mention of the grant of the patent: **07.08.2024**
(21) Application number: 22202444.0
(22) Date of filing: 19.10.2022
(51) Int. Cl.: B60C 25/138, B60C 25/05

(54) **MACHINE FOR MOUNTING AND DEMOUNTING A TYRE RELATIVE TO A CORRESPONDING RIM AND WHEEL SERVICING METHOD**
MASCHINE ZUR MONTAGE UND DEMONTAGE EINES REIFENS IN BEZUG AUF EINE ENTSPRECHENDE FELGE UND RADWARTUNGSVERFAHREN
MACHINE DE MONTAGE ET DE DÉMONTAGE D'UN PNEUMATIQUE PAR RAPPORT À UNE JANTE ET PROCÉDÉ D'ENTRETIEN DE ROUE CORRESPONDANT

(30) Priority: 20.10.2021 IT 202100026954
(43) Date of publication of application: 26.04.2023
(73) Proprietor: NEXION S.p.A., 42015 Correggio (RE) (IT)
(72) Inventor: CORGHI, Giulio, 42015 CORREGGIO (IT)
(74) Representative: Conti, Marco

(56) References cited:
- EP-A1- 1 946 946
- EP-A1- 2 527 167
- EP-B1- 2 962 876
- CN-B- 106 183 665

## Description

The present invention

This invention relates to a machine for mounting and demounting a tyre relative to a corresponding vehicle wheel rim.

This invention also relates to a vehicle wheel servicing method.

To date, demounting and mounting tyres from and to respective wheel rims is performed using tyre changing machines equipped with a wheel-holder unit and at least one operating unit.

The wheel-holder unit has the function of setting the wheel in motion (in rotation and/or in translation) relative to a respective axis.

The wheel may be mounted on the wheel-holder unit in such a way that its axis of rotation is vertical (as in the case of this disclosure). Alternatively, the wheel may be mounted on the wheel-holder unit in such a way that its axis of rotation is horizontal. The second solution is preferred in the case of particularly large and heavy wheels as, for example, those of trucks and lorries.

The position of the wheel on the wheel-holder unit allows defining a lower bead and sidewall of the tyre and an upper bead and sidewall of the tyre. More specifically, the lower bead and sidewall are faced towards a motor of the wheel holder, whilst the upper bead and sidewall are faced in the opposite direction.

As regards the operating unit, this comprises tools used in different operating steps during the demounting and mounting of the tyre.

In effect, each operating step requires the action of specific tools forming part of the operating unit. The presence of multiple tools and apparatuses makes the structure of the machine considerably complicated, increases its overall dimensions and costs and reduces the operator's visibility in proximity to the zone where the machine is working, making work onerous and awkward.

A partial solution to this drawback is provided in patent document EP2962876B1, which discloses a machine having an operating unit with a plurality of tools mounted on it, specifically a mounting (or fitting) tool, a demounting (or removal) tool, a sidewall pressing tool and a bead breaker disc.

The operating unit is mounted on an arm that is rotatable about its own axis of extension so that the wheel is confronted by a different tool, as required for detaching the bead, mounting the tyre or demounting the tyre. More in detail, the tools are angularly spaced around one end of the rotatable arm and supported by respective auxiliary bars in such a way that a rotation of the rotatable arm corresponds to an action by which a tool is brought to confront the wheel.

The arm is also extractable or retractable relative to the machine so that, when not in use, it occupies a position where it does not interfere with the work being done.

More in detail, the bead breaker disc is configured to detach the tyre bead from the respective annular edge of the wheel rim. Indeed, it is known that the heat generated during normal use of the tyre causes the rubber the tyre is made of to adhere to the rim as a result of what is known as vulcanization. In this situation, to enable the tyre to be properly demounted, the bead must first be freed from the edge of the rim using bead breaker discs. More in detail, the wheel is set in motion (specifically in rotation) so that the bead breaker disc can apply pressure all the way round the respective sidewall of the tyre in order to detach the bead from the edge of the wheel rim.

As shown in EP2962876B1, once the tyre has come free of the rim, the operating unit rotates and acts on the tyre with the demounting tool which is configured to be inserted between the upper bead of the tyre and the corresponding annular edge of the wheel rim. In this situation, by setting the wheel in rotation, the demounting tool forces the tyre out of the rim so that the tyre can be extracted and effectively removed from the rim.

To mount the tyre, on the other hand, the operating unit acts on the tyre with the mounting tool to make it easier to seat the tyre, specifically the upper bead, in the wheel rim. In this situation, the sidewall pressing tool acts in conjunction with the mounting tool to press down on the sidewall so as to force it into the rim.

Disadvantageously, although the configuration of the operating unit allows reducing the overall dimensions of the machine, it is not perfectly optimized in use because it does not allow moving the tools independently of each other. For example, the sidewall pressing tool mounted on the operating unit cannot operate independently of the mounting tool because it is mounted on an auxiliary bar that extends from the auxiliary bar of the mounting tool. In this situation, it is impossible to precisely adjust the positions of the tools and their respective points of action on the wheel according to the type of wheel whose tyre needs to be demounted and mounted.

Moreover, the above mentioned type of operating unit makes it impossible for a tool to act in conjunction with a further tool because it is rotatable about its axis in order to operate on the wheel with one tool at a time.

The machines described in patent documents EP2484541A1 and EP1946946A1 both have similar disadvantages. In the one described in the second of these documents, the arm has a first end that is connected to a frame of the machine and a second end that is configured to support the operating unit. More specifically, each of the tools on the operating unit is applied to the second end of the arm by means of auxiliary bars so as to be angularly spaced around the second end itself. Furthermore, the arm is rotatable about its axis of extension in such a way as to adopt predetermined angular positions such that the mounting tool, the demounting tool and the bead breaker disc each confront the wheel in turn to operate thereon.

In this machine, too, it is not possible to use more than one tool at the same time and thus the mounting and demounting operations are not perfectly optimized.

Other examples of tyre fitting machines are known from patent documents CN106183665B and EP2527167A1. However, also these solutions fail to provide a remedy to the disadvantages mentioned above.

This invention therefore has for an aim to provide a machine for demounting and mounting a tyre relative to a corresponding vehicle wheel rim and a method for performing a service on a vehicle wheel to overcome the above mentioned disadvantages of the prior art.

More specifically, one aim of this invention is to provide a machine that is efficient, versatile and fast.

Another aim of this invention is to provide a machine that is robust and reliable.

Another aim of this invention is to provide a machine that is convenient to use and that allows operating on the wheel with two or more tools simultaneously, according to needs.

Another aim of this invention is to provide a method for performing a reliable, precise and fast service on the wheel.

The aims are fully achieved by a machine for demounting and mounting a tyre relative to a corresponding vehicle wheel rim and a method for performing a service on a vehicle wheel according to this invention as characterized in the appended claims.

More specifically, the preset aims are achieved by a machine for mounting and demounting a tyre relative to a corresponding vehicle wheel rim.

The machine comprises a column including a slideway extending along a vertical direction. The machine also comprises a wheel-holder unit configured to allow locking the wheel rim during operations for demounting and mounting the respective tyre. When placed on the wheel-holder unit, the wheel has a sidewall referred to as "lower" sidewall, facing towards the wheel-holder unit, and a sidewall referred to as "upper" sidewall, opposite to the lower sidewall.

The wheel-holder unit rotates about an axis of rotation, parallel to the vertical direction.

In the preferred embodiment, the wheel-holder unit also moves in translation along a horizontal axis of translation towards and away from the column.

In an embodiment, the machine comprises a first hydraulic actuator that is configured to move the wheel-holder unit in translation.

The machine also comprises a tool holder carriage that is movable along the slideway between a working position where it is close to the wheel-holder unit from above to operate on the wheel (more specifically, on the upper sidewall of the wheel placed on the wheel-holder unit) and a rest position, where it is away from the wheel-holder unit.

The tool holder carriage is moved along the slideway by a second actuator. In a possible embodiment, the second actuator is hydraulic.

The tool holder carriage comprises a body that is slidably coupled to the slideway and a working unit that is movably coupled to the body to move vertically in translation along a movement axis relative thereto.

In other words, the body of the tool holder carriage is configured to move in translation vertically along the slideway, whilst the working unit is movable in translation vertically relative to the body of the tool holder carriage even when the tool holder carriage occupies a fixed position along the slideway.

In the preferred embodiment, the machine comprises an actuator, for example, a pneumatic, electric or hydraulic actuator, configured to move the working unit relative to the body of the tool holder carriage.

The tool holder carriage includes a mounting tool, configured to be inserted between the upper bead and the corresponding annular edge of the wheel rim in order to mount the tyre. The tool holder carriage also comprises a first arm and a demounting tool, connected to the first arm and configured to be inserted between the upper bead of the tyre and the annular edge of the wheel rim in order to demount the tyre.

The first arm comprises a first end which is connected to the body of the tool holder carriage and a second end on which the demounting tool is mounted.

In a preferred embodiment, the mounting tool is also mounted on the second end of the first arm, at a position opposite the demounting tool.

In the preferred embodiment, the mounting tool and the demounting tool are fitted to the second end of the first arm at positions angularly spaced from each other by an angle substantially equal to a flat angle.

In the preferred embodiment, the first arm is movable in rotation about a first horizontal sliding axis in such a way as to orient the mounting tool and the demounting tool towards the wheel alternately to define the respective operating configurations. In other words, the first arm rotates between two predetermined angular positions so that the wheel is confronted by the demounting tool or the mounting tool alternately, depending on whether the tyre has to be demounted or mounted from or to the rim.

The first arm is slidably movable along the first horizontal sliding axis between a rest position, where it is retracted towards the column, and a working position, where it is extracted away from the column.

The first horizontal sliding axis is aligned with the horizontal axis of translation of the wheel-holder unit. This aspect is particularly advantageous in that it allows the demounting tool to act radially relative to the centre of the wheel, making the demounting operation more precise, reliable and less fatiguing on the tyre.

The tool holder carriage also comprises a second arm and a bead seater tool, connected to the second arm and configured to operate on the sidewall of the tyre to apply a flattening pressure thereon.

In a possible embodiment, the bead seater tool comprises a substantially frustoconical disc whose lateral surface is shaped to engage the sidewall of the tyre.

The second arm comprises a first end that is connected to the working unit, for example by means of a guide that is integral with the working unit, and a second end that is connected to the bead seater tool.

In the preferred embodiment, the first end is connected to the working unit by a pneumatic cylinder.

Since the first end is operatively associated with the working unit, the second arm is movable in translation along a direction parallel to the vertical direction so as to vertically adjust the position of the bead seater tool even when the tool holder carriage is at a fixed vertical height along the slideway.

In this situation, once the tool holder carriage occupies a predetermined position along the slideway, the second arm can be lifted or lowered vertically by means of the working unit so that its position relative to the tool holder carriage can be precisely controlled.

The second arm is also slidably movable along a second horizontal sliding axis, spaced from the first horizontal sliding axis, between a rest position, where it is retracted towards the column, and a working position, where it is extracted away from the column.

In a preferred embodiment, the first horizontal sliding axis and the second horizontal sliding axis are parallel to, and spaced from, each other and allow the respective tools mounted on them to act on the wheel simultaneously when necessary.

The tool holder carriage may also comprise a third arm and, in a preferred embodiment, a bead breaker disc connected to the third arm.

The bead breaker disc is configured to engage the tyre in such a way as to first separate the tyre from the annular edge of the rim.

More specifically, the third arm is operatively activated before demounting proper starts because the tyre (at its vulcanized points) must first be broken free of the rim using the bead breaker disc.

In an embodiment, the third arm has a first end that is connected to the body of the tool holder carriage and a second end to which the bead breaker disc is connected.

In this embodiment, also, the third arm is movable by rotation about a horizontal axis transverse to the first horizontal sliding axis in order to tilt it between a rest position, where the bead breaker disc is distal from the wheel, and a working position, where the bead breaker disc is oriented (or faced) towards the wheel.

In the preferred embodiment, the third arm is moved by an actuator, specifically a pneumatic actuator.

In the preferred embodiment, the third arm moves in a vertical plane that includes the first horizontal sliding axis of the first arm and the axis of rotation of the wheel-holder unit. In this situation, the third arm is positioned substantially above (that is at a greater vertical height relative to) the first arm.

More specifically, when the third arm is at the rest position, the bead breaker disc is located above the demounting and mounting tools positioned at the respective rest and working positions. In this situation, the first arm can pass freely between the rest position and the working position without any interference from the third arm.

Owing to their locations, the first arm and the third arm can operate on the wheel alternately so that when one between the first and the third arm is at the rest position, the other can pass between the rest position and the working position and vice versa. On the other hand, when one between the first and the third arm is at the working position, the other arm is prevented from passing from the rest position to the working position. That way, the two arms do not interfere with each other. This aspect will become clear as this description continues.

In a further possible embodiment, the third arm, provided with the bead breaker disc, is mounted at a free end of the first arm, specifically the second end thereof. In this embodiment, the mounting tool is mounted on a fourth arm that is independent of the first and second arms. Alternatively, the third arm, provided with the bead breaker disc, may be mounted at a free end of the first arm, specifically the second end thereof. In this embodiment, the mounting tool is also mounted at the free end of the first arm.

In use, to demount the tyre from the rim, the wheel is mounted on the wheel-holder unit while the first and the second arm are at the respective rest positions.

The third arm is tilted to the working position and the tool holder carriage is made to slide downwards along the slideway and brought to the working position. In this situation, the bead breaker disc is engaged on the tyre in such a way as to first separate the tyre from the rim while the first and the second arm are at the rest positions.

While the bead breaker disc acts on the tyre, the tool holder carriage may be moved downwards along the slideway in such a way that the bead breaker disc is pressed further in between the tyre and the edge of the rim so as to separate the two completely. Next, the tool holder carriage moves up a little way so that the lower bead can be broken. More specifically, a second bead breaker disc, operating on the side of the wheel facing the wheel-holder unit, is activated. In this situation, the second bead breaker disc operates on the lower bead to detach it from the lower edge of the rim.

Once the tyre is completely detached from the rim, the tool holder carriage is taken to the rest position and the third arm is tilted to the rest position.

Next, the first arm is made to slide along the first horizontal sliding axis to the working position and the demounting tool is positioned towards the wheel. In an embodiment, the second arm is also moved to the working position and slides along the second horizontal sliding axis.

The second arm is then made to move in translation along the movement axis (by means of the working unit) relative to the tool holder carriage so as to position itself at a height below the first arm.

Next, the tool holder carriage is lowered towards the working position so that the bead seater tool presses against the sidewall of the tyre and the demounting tool can interact with the upper bead of the tyre. During this stage, the bead seater tool, by operating on the sidewall of the tyre, creates a space allowing the demounting tool to be inserted between the upper bead and the upper edge of the rim.

Once the demounting tool has been inserted, the second arm is moved in translation vertically (that is to say, lifted by the working unit) relative to the tool holder carriage so the bead seater tool is moved away from the sidewall of the wheel and made to slide back along the second horizontal sliding axis to the rest position.

In this situation, only the demounting tool operatively engages the tyre and, more precisely, it engages the tyre bead with a curved end portion of it. The wheel-holder unit is then set in rotation and the demounting tool disengages the bead from the rim, causing the tyre to come off (or be detached from) the rim completely. When this operation is over, the tool holder carriage is lifted along the slideway towards the rest position to allow the tyre to be removed.

To mount a new tyre on the rim, the tool holder carriage is made ready in such a way that the third arm is located at the rest position and the first arm at the working position. In the preferred embodiment, the first arm is also rotated about the first horizontal sliding axis so that the mounting tool faces the tyre and the rim.

Next, the second arm is taken to the working position and made to move in translation (by means of the working unit) relative to the tool holder carriage towards the tyre. In this situation, the tool holder carriage is moved to the working position so that the mounting tool is interposed between the tyre and the rim and the bead seater tool presses against the sidewall of the tyre to force the bead into the rim. In this situation, while continuing to hold the bead seater tool against the tyre, the second arm can be moved (by means of the working unit) vertically in translation so that the bead seater tool is slightly raised or lowered.

To facilitate insertion of the bead into the rim, the machine also has an upper arm extending above the wheel-holder unit between a first end, operatively connected to the column, and a second end. The machine also has a sidewall pressing tool that is connected to the second end of the upper arm and that is configured to engage a sidewall of the tyre during mounting of the tyre to the rim.

In a possible embodiment, the machine might comprise an arm like that shown in EP3659832A1.

In use, therefore, when the tyre is being mounted, the bead seater tool and the sidewall pressing tool serve as points for flattening the sidewall of the tyre to force the tyre to be inserted into the rim.

Advantageously, the presence of the arm and the sidewall pressing tool allows mounting even particularly large tyres where the flattening pressure must be applied at two or more points to enable the tyre to be inserted into the respective rim.

In a possible embodiment, the movement of the machine occurs through operation of a control unit which is configured to control the movement of the wheel-holder unit and/or of the tool holder carriage based on a data item representing the diameter of the wheel.

Alternatively, the movement may occur through the action of an operator working on the machine from a control desk and/or a control pedal unit. Also an object of this invention is a method for performing a service on a vehicle wheel.

The method comprises a step of preparing a machine for mounting and demounting a tyre relative to a corresponding vehicle wheel rim.

The machine comprises a column including a slideway extending along a vertical direction and a wheel-holder unit that rotates about an axis of rotation, parallel to the vertical direction. The machine also comprises a tool holder carriage. The tool holder carriage includes a body that is slidably coupled to the slideway and a working unit that is movably coupled to the body. More specifically, the working unit is slidable, relative to the body, along a direction parallel to the vertical direction.

The tool holder carriage also comprises a first arm, a second arm and a third arm.

The tool holder carriage also comprises a mounting tool. In the preferred embodiment, the mounting tool is connected to the first arm. Alternatively, the mounting tool may be connected to a fourth arm of the tool holder carriage, independent of the first arm and of the second arm.

The machine also comprises a demounting tool that is connected to the first arm, a bead seater that is connected to the second arm and a bead breaker disc that is connected to the third arm.

In a possible embodiment, the first arm comprises a first end that is connected to the body and a second end that is connected to the demounting tool and, in the preferred embodiment, also to the mounting tool.

In a possible embodiment, the second arm comprises a first end that is connected to the working unit and a second end that is connected to the bead seater tool.

In a possible embodiment, the third arm is hinged to the body of the tool holder carriage. The third arm comprises a first arm that is connected to the body and a second end that is connected to the bead breaker disc.

The method comprises a step of moving the first arm along a first horizontal sliding axis between a rest position, where it is retracted towards the column, and a working position, where it is extracted away from the column so that one between the demounting tool and the mounting tool is inserted between the tyre bead and an annular edge of the rim.

The method may also comprise a step of moving the second arm along a second horizontal sliding axis that is spaced from the first horizontal sliding axis, between a rest position, where it is retracted towards the column, and a working position, where it is extracted away from the column so that the bead seater tool can operate on a sidewall of the tyre to apply a flattening pressure thereon.

Next, the method comprises a step of moving the working unit vertically in translation relative to the body to cause the bead seater tool to come into abutment against the sidewall of the tyre.

After that, the method comprises a step of moving the tool holder carriage along the slideway from a rest position, where it is away from the wheel-holder unit, to a working position where it is close to the wheel-holder unit from above to operate on the wheel.

In a possible embodiment, when intending to demount the tyre from the rim, before the step of moving the tool holder carriage and before the steps of moving the first and second arms, the method further comprises a step of rotating the third arm about a horizontal axis transverse to the first horizontal sliding axis to be tilted between a rest position, where the bead breaker disc is distal from the wheel, and a working position, where the bead breaker disc is faced towards the wheel.

Next, the method comprises a step of moving the tool holder carriage along the slideway from the rest position to the working position so that the bead breaker disc engages the tyre and separates the vulcanized tyre rubber from the rim.

In other words, the step of rotating the third arm and the subsequent step of setting the wheel-holder unit in rotation define a step of first detaching the tyre from the rim to prepare for demounting the tyre from the rim. Further features and advantages of this invention are more apparent in the exemplary, hence non-limiting, description of an embodiment of a machine for mounting and demounting a tyre relative to a corresponding vehicle wheel rim and a method for performing a service on a vehicle wheel.

The description is set out below with reference to the accompanying drawings which are provided solely for purposes of illustration without limiting the scope of the invention and in which:
- Figure 1 shows a perspective view of an embodiment of a machine of this invention;
- Figures 2A and 2B show perspective views of a detail of the machine in two different configurations;
- Figures 3A-3C show perspective views of the machine of this invention at specific moments in its operation.

With reference to the accompanying drawings, the letter M denotes a machine for mounting and demounting a tyre P relative to a corresponding rim C of a vehicle wheel R.

The terms "rim" and "ring" are used indistinctly to denote the same part of the wheel R.

The machine M comprises a column 100 including a slideway 101 extending along a vertical direction W.

The machine M also comprises a wheel-holder unit 200 on which the rim C of the wheel R is fixed during operations for mounting and demounting the respective tyre P.

In the embodiment illustrated in the accompanying drawings, the wheel-holder unit 200 rests on a base of the machine M and stands directly in front of the column 100.

The wheel-holder unit 200 rotates about an axis of rotation Y, parallel to the vertical direction W.

In the embodiment shown in the accompanying drawings, the wheel-holder unit 200 also moves in translation along a horizontal axis of translation X3 towards and away from the column 100.

In an embodiment, the machine M comprises a first hydraulic actuator that is configured to move the wheel-holder unit 200 in translation.

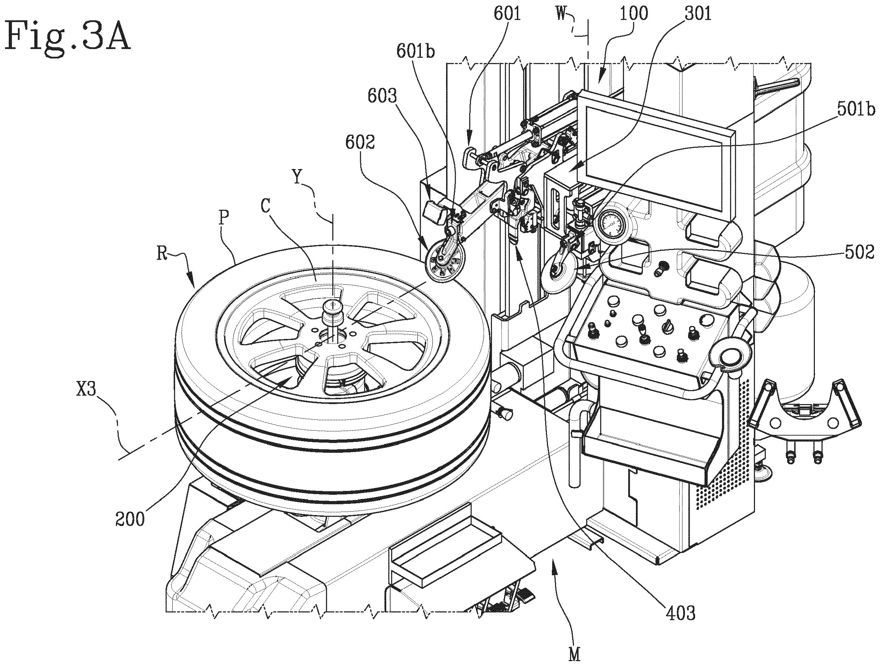

As shown in Figures 3A-3C, once the wheel R has been mounted on the wheel-holder unit 200, we may define a "lower sidewall", facing towards the base of the machine M and an "upper sidewall", opposite to the lower sidewall. Similarly, we may define a "lower bead", an "upper bead", an "edge of the lower ring" and an "edge of the upper ring".

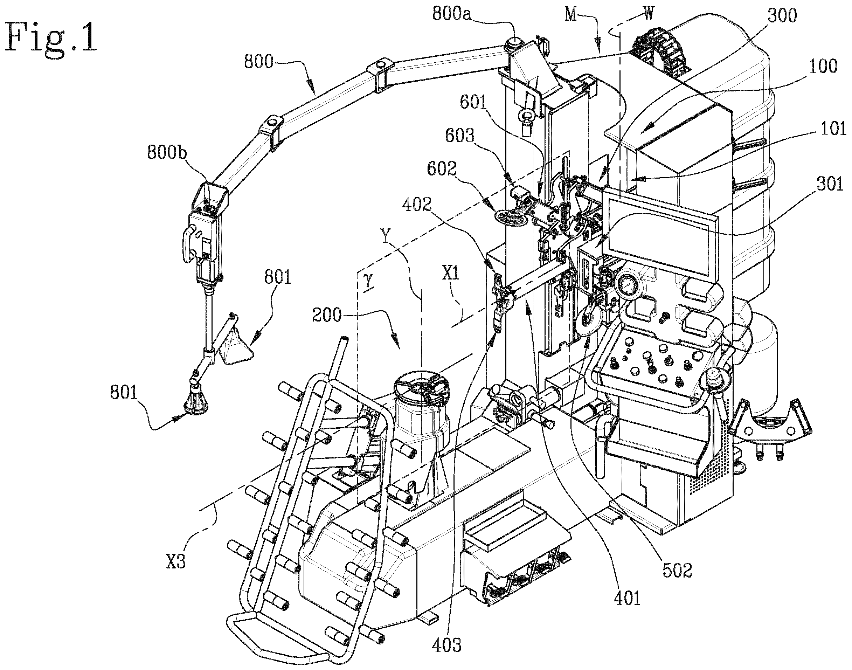

As shown in Figure 1, the machine M also comprises a tool holder carriage 300 that is movable along the slideway 101 between a working position where it is close to the wheel-holder unit 200 from above to operate on the wheel R (more specifically, on the upper sidewall of the wheel R) and a rest position, where it is away from the wheel-holder unit 200.

The carriage 300 is moved along the slideway 101 by a second hydraulic actuator.

Alternatively, the tool holder carriage 300 may be moved by an electric actuator.

Advantageously, using the hydraulic actuator allows moving the tool holder carriage 300 easily despite its very heavy weight. In particular, greater forces can be applied on the tool holder carriage 300 without having to increase the size of the actuator.

The tool holder carriage 300 comprises a body 301 that is slidably coupled to the slideway 101.

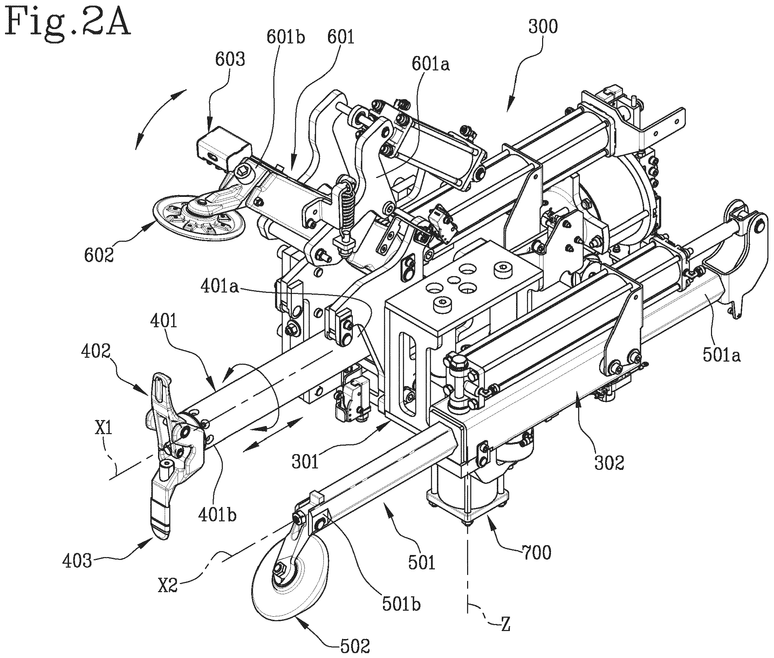

As shown in Figures 2A-2B, the tool holder carriage 300 also comprises a first arm 401.

The tool holder carriage 300 includes a mounting tool 403, configured to be inserted between a bead of the tyre and an edge of the wheel rim in order to mount the tyre.

In the embodiment illustrated, the mounting tool 403 is connected to the first arm 401.

Alternatively, the mounting tool 403 might be mounted on an independent arm.

The tool holder carriage 300 also comprises a demounting tool 402, configured to be inserted between a bead of the tyre and an edge of the wheel rim in order to demount the tyre.

The demounting tool 402 is connected to the first arm 401.

In the preferred embodiment, therefore, the demounting tool 402 and the mounting tool 403 are connected to the first arm 401 and are configured to be inserted alternately between a bead (specifically an upper bead) of the tyre P and an annular edge (specifically, an upper edge) of the rim C.

More in detail, the first arm 401 comprises a first end 401a that is connected to the body 301 of the tool holder carriage 300 and a second end 401b where the mounting tool 403 and the demounting tool 402 are mounted opposite to each other.

As may be seen in Figure 2A, the demounting tool 402 has a first stretch which is substantially flat and a second stretch which is curved or hooked and which is configured, after the demounting tool 402 has been inserted between the bead of the tyre P and the annular edge of the rim C, to engage the bead and pull it out of the rim C.

The mounting tool 403, on the other hand, has a substantially flat shape, and is provided with a visual element (such as a coloured strip or mark) configured to indicate how far in the mounting tool 403 has been inserted between the tyre P and the rim C during a mounting operation.

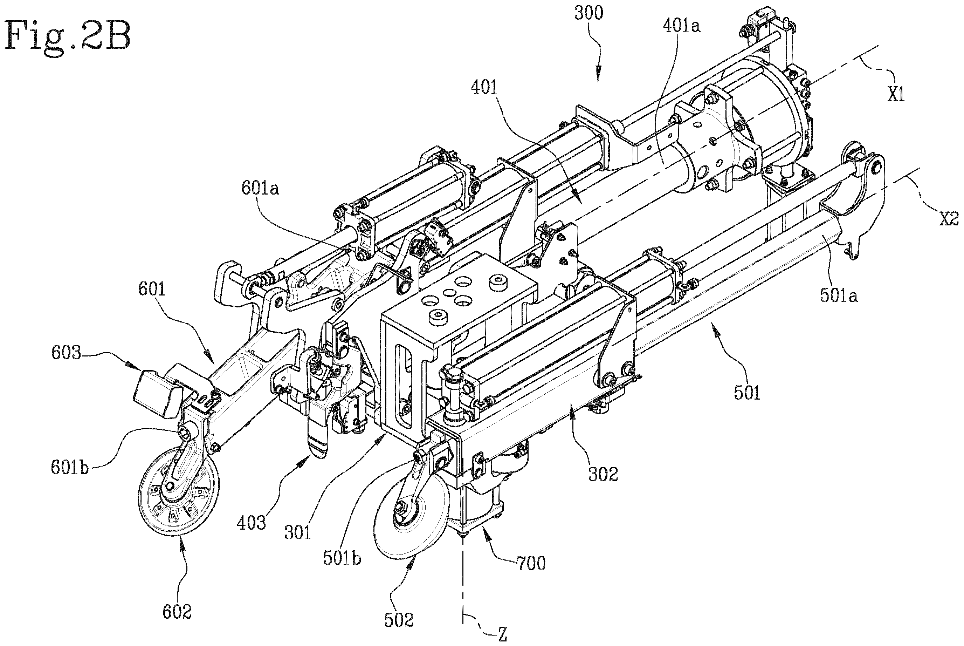

The first arm 401 is slidably movable along the first horizontal sliding axis X1 between a rest position, where it is retracted towards the column 100, and a working position, where it is extracted away from the column 100 (Figure 2A and Figure 2B).

Advantageously, the possibility of extracting and retracting the first arm 401 to and from the tool holder carriage 300 prevents the mounting tool 403 and the demounting tool 402 from hindering other operations carried out on the wheel R.

As shown, for example, in Figure 1, the first horizontal sliding axis X1 is aligned with the horizontal axis of translation X3. This aspect is particularly advantageous in that it allows the mounting and demounting tools 403, 402 to work radially relative to the centre of the wheel R, thereby making mounting and demounting operations more precise and reliable.

The first arm 401 is also movable in rotation about the first horizontal sliding axis X1 in such a way as to orient the mounting tool 403 and the demounting tool 402 alternately towards the wheel R to define respective operating configurations. In this situation, the first arm 401 rotates between two predetermined angular positions so the wheel R is confronted alternately by the demounting tool 402 or the mounting tool 403.

In other words, when the tyre P has to be demounted from the rim C, the first arm 401 is rotated about the first horizontal sliding axis X1 so that the demounting tool 402 is made to confront the wheel R. Conversely, when the tyre P has to be mounted to the rim C, the first arm 401 is rotated about the first horizontal sliding axis X1 so that the mounting tool 403 is made to confront the wheel R.

Advantageously, fitting the mounting tool 403 and the demounting tool 402 to the same arm allows reducing the overall dimensions and cost of the tool holder carriage 300.

The tool holder carriage 300 also comprises a second arm 501.

The tool holder carriage 300 also comprises a bead seater tool 502, connected to the second arm 501 and configured to operate on the sidewall of the tyre P (specifically, on the upper sidewall) to apply a flattening pressure thereon.

In the embodiment shown in the accompanying drawings, the bead seater tool 502 comprises a substantially frustoconical disc whose lateral surface is shaped to engage the sidewall of the tyre P. The bead seater tool 502 is pivoted to the second arm 501 in such a way as to be freely movable in rotation.

More in detail, the bead seater tool 502 is connected to a second end 501b of the second arm 501, while a first end 501a of the second arm 501 is integral (or associated) with a working unit 302.

In effect, as shown in Figures 2A and 2B, the tool holder carriage 300 includes a working unit 302 that is movably coupled to the body 301 to move in translation vertically relative thereto. In this situation, the second arm 501 (together with the bead seater tool 502) is movable up and down parallel to the vertical direction W, relative to the tool holder carriage 300. This aspect is particularly advantageous in that it allows precisely adjusting the position of the bead seater tool 502 relative to the tyre P during the operations for mounting (and demounting) the tyre P.

More specifically, in use, once the tool holder carriage 300 has been brought to the working position and the bead seater tool 502 is engaged on the sidewall of the tyre P, the wheel-holder unit 200 is activated. In this situation, the working unit 302 is moved continuously in translation vertically in such a way as to lift or lower the bead seater tool 502 relative to the tyre P to vary and adjust the position of the bead seater tool 502 on the sidewall of the tyre P.

In the preferred embodiment, the machine "M" comprises a pneumatic actuator 700 configured to move the working unit 302 relative to the body 301.

Preferably, the actuator 700 allows the working unit 302 to travel vertically in translation for a distance of approximately 85 mm.

The second arm 501 is also slidably movable along a second horizontal sliding axis X2, spaced from the first horizontal sliding axis X1, between a rest position, where it is retracted towards the column 100, and a working position, where it is extracted away from the column 100.

As shown in Figures 2A and 2B, the first horizontal sliding axis X1 and the second horizontal sliding axis X2 are parallel to each other and spaced apart to allow the first and second arms 401, 501, respectively, to move in translation between the working position and the rest position.

In effect, in use, when the first arm 401 is at the working position, it is an advantage that the second arm 501 is also able to move to this position so that the bead seater tool 502 can act in conjunction with the mounting tool 403 or with the demounting tool 402.

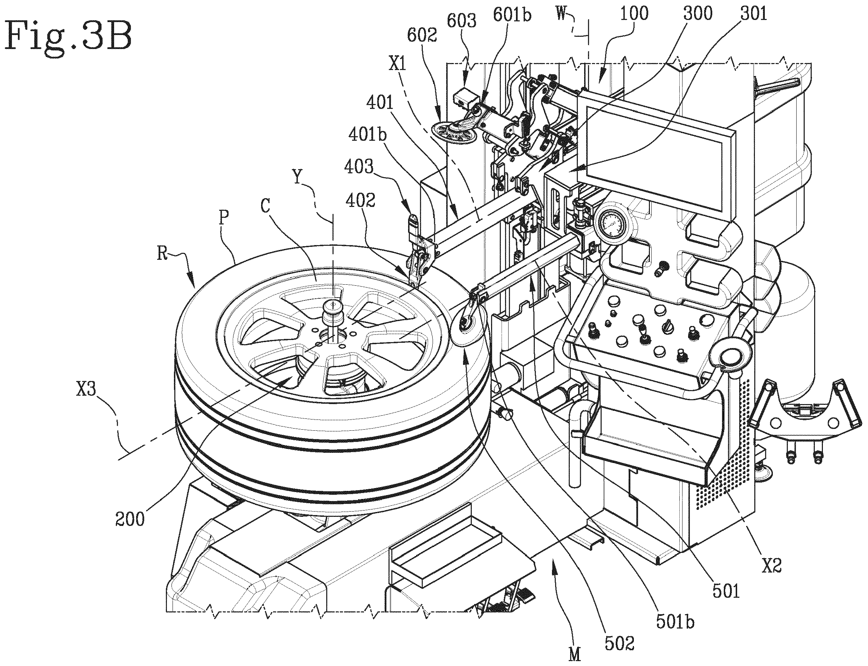

Looking in more in detail, in use, when the tyre P needs to be demounted from the rim C, the first arm 401 is made to slide along the first horizontal sliding axis X1 and taken to the working position and the second arm 501 is made to slide along the second horizontal sliding axis X2 towards the working position (Figure 3B).

Next, the second arm 501 is moved in translation parallel to the vertical direction W to a vertical height lower than that of the first arm 401.

Next, the tool holder carriage 300 is moved to the working position so that the bead seater tool 502 applies a flattening pressure on the sidewall of the tyre P to separate the upper bead of the tyre P from the upper annular edge of the rim C.

In this situation, the demounting tool 402 is inserted into the free space that has been created by the bead seater tool 502 between the bead of the tyre P and the annular edge of the rim C. This prevents scraping and stretching the tyre P when the demounting tool 402 is inserted between the sidewall of the tyre P and the annular edge of the rim C.

Once the demounting tool 402 has been inserted in the free space, the second arm 502 is raised by the working unit 302 in translation parallel to the vertical direction W so as to move the bead seater tool 502 away from the wheel R. The second arm 501 is also retracted to the rest position. In this situation, the wheel-holder unit 200 is activated and the demounting tool 402 extracts the upper bead of the tyre P from the rim C.

On the other hand, when the tyre P needs to be mounted to the rim C, the first arm 401 is made to slide along the first horizontal sliding axis X1 towards the working position and is rotated about the first horizontal sliding axis X1 so as to make the mounting tool 403 confront the wheel R. The second arm 501 is made to slide along the second horizontal sliding axis X2 towards the working position.

Next, the tool holder carriage 300 is brought to the working position.

Next, the second arm 501 is moved in translation parallel to the vertical direction W relative to the tool holder carriage 300 and is taken to a vertical height lower than that of the first arm 401.

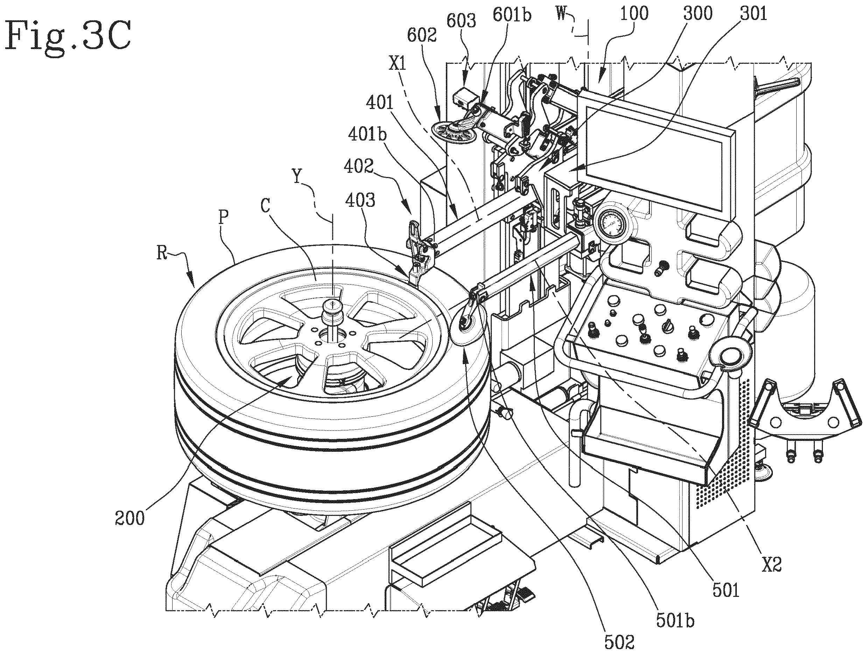

In this situation, the bead seater tool 502 operates on the sidewall of the tyre P to force it inside the rim C while the mounting tool 402 is inserted between the sidewall of the tyre P and the upper annular edge of the rim C (Figure 3C).

Once the bead seater tool 502 and the mounting tool 402 are in place, the wheel-holder unit 200 is started. In this situation, while the tool holder carriage 300 remains at a fixed height along the vertical direction W, the bead seater tool 502 is lowered and lifted together with the working unit 302 in such a way as to adjust the position at which it presses down on and flattens the sidewall of the tyre P below it. That way, the bead seater tool 502 forces the upper bead of the tyre P to remain within the ring C.

Advantageously, the possibility of moving the second arm 501 to the working position when the first arm 401 is also at the working position allows simplifying and speeding up the mounting and demounting operations.

The tool holder carriage 300 also comprises a third arm 601 and a bead breaker disc 602 connected to the third arm 601.

In the preferred embodiment, the bead breaker disc may be of the type described in document EP3722114A1.

More in detail, the bead breaker disc 602 is connected to the third arm 601 by a pin or a hinge about which it can rotate idly.

The bead breaker disc 602 is configured to operatively engage the tyre in such a way as to first separate the bead of the tyre P from the annular edge of the rim C. More specifically, the bead breaker disc 602 is able to separate the tyre P from the rim C at the points where the rubber of the tyre P has become vulcanized.

In the embodiment shown in Figure 2A, the third arm 601 comprises a first end 601a that is connected (or hinged) to the body 301 and a second end 601b that is connected to the bead breaker disc 602.

The third arm 601 is movable by rotation about a horizontal axis transverse to the first horizontal sliding axis X1 in order to tilt it between a rest position, where the bead breaker disc 602 is distal from the wheel R, and a working position, where the bead breaker disc 602 is faced towards the wheel R.

At the rest position, the bead breaker disc 602 is located above the demounting and mounting tools 402, 403 positioned at the respective rest position or at the working position. In this situation, the bead breaker disc 602 does not impede the sliding movement of the first arm 401 below it during the mounting and demounting of the tyre P to and from the rim C.

In effect, in use, the third arm 601 is the first to act on the wheel R so that the bead breaker disc 602 detaches the tyre P from the rim C, in particular at the points where the rubber of the tyre P has become vulcanized. The action of the bead breaker disc 602 thus defines a step of detaching before the step of actually demounting the tyre P from the rim C. After the step of detaching, the bead breaker disc 602 stops acting on the wheel R and the third arm 601 is moved to the rest position so that the bead breaker disc 602 does not interfere with the demounting and mounting operations and is ready for a subsequent step of detaching on another wheel R.

As shown in Figure 1, the third arm 601 moves in a vertical plane y that includes the first horizontal sliding axis X1 of the first arm 401 and the axis of rotation Y of the wheel-holder unit 200. In this situation, the third arm 601, when it is at the working position, is substantially aligned with the first horizontal sliding axis X1 so as to act on the wheel R with precision.

In the preferred embodiment, the machine M also comprises a distributor device 603, integral with the third arm 601 and configured to deliver a lubricating substance when the third arm 601 is at the working position.

Looking in more detail, the distributor device 603 is integral with the second end 601b so as to spray the sidewall of the tyre P with the lubricating substance to facilitate detaching the bead from the rim C.

In a possible embodiment of this invention, the machine M is also provided with an additional tool holder carriage, slidable along the slideway 101 and configured to operate on the lower sidewall of the wheel R. More specifically, the additional tool holder carriage comprises a bead breaker disc that is configured to detach the lower bead of the tyre P from the lower annular edge of the rim C when the tyre P is being demounted from the rim C.

In a preferred embodiment, the additional tool holder carriage is made according to what is described in document EP2965927.

The additional tool holder carriage is moved by a pneumatic actuator.

In an embodiment, the machine M also comprises an upper arm 800, extending above the wheel-holder unit 200 between a first end 800a that is operatively connected to the column 101, and a second end 800b.

The machine M also comprises a sidewall pressing tool 801 such as, for example, a roller, connected to the second end 800b of the upper arm 800 and configured to engage a sidewall of the tyre P during mounting of the tyre P to the rim C.

Looking in more detail, the sidewall pressing tool 801 is configured to apply a flattening pressure on the sidewall of the tyre P in order to force the bead into the rim C while the tyre is being mounted. The sidewall pressing tool 801 thus acts in conjunction with the bead seater tool 502 to keep the bead within the rim C while the tyre P is being mounted to the rim C.

In the embodiment shown in Figure 1, the upper arm 800 is rotatable about the first end 800a in such a way as to place the sidewall pressing tool 801 at a position above the wheel-holder unit 200 to act on the wheel R or to move the sidewall pressing tool 801 away when it is not being used.

In use, therefore, to demount a tyre P from the respective rim C, the wheel R must first be mounted on the wheel-holder unit 200. In this situation, the first and the second arms 401, 501 are at the rest position, as is also the third arm 601.

Next, the third arm 601 is tilted to the working position and the tool holder carriage 300 is made to slide along the slideway 101 from the rest position to the working position.

In this situation, the bead breaker disc 602 engages the tyre P, pressing down on it so as to be inserted between the tyre P and the edge of the ring C. The action of the bead breaker disc 602 thus separates the bead of the tyre P from the ring C (Figure 3A).

In a possible embodiment, while the bead breaker disc 602 is engaged on the tyre P, the tool holder carriage 300 can be moved down slightly along the sliding guide 101 so as to ensure that the rubber of the tyre P is completely detached from the rim C.

Once the bead is detached, the tool holder carriage 300 is raised slightly and the third arm 601 is tilted to the rest position so that the bead breaker disc 602 is above the mounting tool 403 and the demounting tool 402. In this situation, as shown in Figure 3B, the first arm 401 is made to slide towards the working position, along the first horizontal sliding axis X1. The second arm 501 is also made to slide towards the working position, along the second horizontal sliding axis X2. Next, the second arm 401 is lowered by the working unit 302 in vertical translation relative to the tool holder carriage 300.

After that, the tool holder carriage 300 is brought to the working position so that the bead seater tool 502 presses against the sidewall of the tyre P to make it easier for the demounting tool 402 to be inserted between the tyre P and the ring C.

After the demounting tool 402 has been inserted between the tyre P and the rim C, the second arm 502 is raised vertically away from the tyre P by a translational movement of the working unit 302 and retracted to the rest position by sliding along the second horizontal axis of translation. With its curved or hooked portion, the demounting tool 402 engages the upper bead of the tyre P and pulls it upwards. In this situation, the wheel-holder unit 200 is activated in rotation and the demounting tool 402 extracts the whole of the upper bead from the rim C, causing the upper bead to be separated of the tyre P to be separated from the rim C.

After that, the tool holder carriage 300 is raised so that the demounting tool 402 pulls the tyre P upwards along with it and, in conjunction with the bead breaker disc mounted on the additional tool holder carriage, causes the lower bead of the tyre P to be lifted away from the upper edge of the rim C.

Demounting of the tyre P ends when the tool holder carriage 300 is lifted to the rest position and the tyre P is removed from the wheel-holder unit 200.

To mount the tyre P to the respective rim C, the mounting tool 403 is made ready above the rim C.

In the preferred embodiment in which the mounting tool 403 is mounted on the first arm 401, the first arm 401 is brought to the working position and then rotated about the first horizontal sliding axis X1 so that the mounting tool 403 confronts the rim C mounted on the wheel-holder unit 200. As shown in Figure 3C, the second arm 501 is also brought to the working position. In this situation, the tool holder carriage 300 is lowered to the working position so that the mounting tool 403 is interposed between the tyre P and the rim C and the bead seater tool 501 is in contact with the sidewall of the tyre P.

In this situation, the second arm 501 is made to move by the working unit 302 vertically in translation along a movement axis Z relative to the tool holder carriage 300 so as to press down on the sidewall of the tyre P. After that, the wheel-holder unit 200 is moved in rotation so that the bead seater tool 502 and the mounting tool 403 can act on the wheel R to force the tyre P into the rim C.

In detail, the position of the bead seater tool 502 on the tyre P can be adjusted by vertically raising or lowering the working unit 302 relative to the body 301.

In the preferred embodiment, during mounting, the upper arm 800 is activated to make the sidewall pressing tool 801 act in conjunction with the bead seater tool 502 to insert the upper bead of the tyre P into the rim C. More specifically, the upper arm 800 is made to rotate about the first end 800a to bring the sidewall pressing tool 801 into contact with the sidewall of the tyre P.

In the preferred embodiment, for each of both the first and the second arm 401, 501 of the tool holder carriage 300, the machine "M" comprises an actuator that is configured to move the arm 401, 501 from the respective working position to the rest position and vice versa. The machine M also comprises a control unit that is configured to allow these actuators to be selectively activated.

The machine M also comprises an actuator that is configured to move the third arm 601 from the working position to the rest position and vice versa.

The control unit is configured to activate the actuator of the first arm 401 and the actuator of the third arm 601 alternately so that when the first arm 401 is at the working position, the third arm 601 is at the respective rest position and vice versa.

In effect, since the first and the third arm 401, 601 are placed substantially one above the other, they must be able to be activated in a controlled manner so as not to interfere with each other during operations for demounting the tyre P.

In another possible embodiment, the actuators can be activated and controlled manually by an operator using pushbuttons and levers on a control desk and/or using a control pedal unit.

In this situation, the machine M comprises a locking device capable of recognizing whether one between the first and the third arm 401, 601 is at the working position and locking the other between the first and the third arm 401, 601 in order to prevent damage to the tool holder carriage 300.

Also an object of this invention is a method for performing a service on a vehicle wheel R. The method comprises a step of preparing a machine M for mounting and demounting a tyre P relative to a corresponding rim C of a vehicle wheel R.

The machine M comprises a column 100 including a slideway 101 extending along a vertical direction W and a wheel-holder unit 200 that rotates about an axis of rotation Y, parallel to the vertical direction W.

The machine M also comprises a tool holder carriage 300.

The tool holder carriage 300 includes a body 301 that is slidably coupled to the slideway 101 and a working unit 302 that is movably coupled to the body 301.

In the preferred embodiment, the working unit 302 is movable slidably vertically relative to the body 301.

The tool holder carriage 300 comprises a first arm 401, a second arm 501 and a third arm 601.

The machine M includes a demounting tool 402, a mounting tool 403, a bead seater tool 502 and a bead breaker disc 602, each connected to one between the first, the second and the third arm 401, 501, 601.

In a possible embodiment, the bead seater tool 502 is connected to the second arm 501, the demounting tool 402 is connected to the first arm 401 and the mounting tool 403 is connected to the first arm 401. In this embodiment, the third arm 601 is mounted at the free end of the first arm 401.

Alternatively, the bead seater tool 502 is mounted on the second arm 501, the mounting tool 403 is mounted on a fourth arm, independent of the first and second arms 401, 501 and the demounting tool 402 is connected to the first arm 401. In this embodiment, the third arm 601 is mounted at the free end of the first arm 401.

On the other hand, in the preferred embodiment (illustrated), the demounting tool 402 and the mounting tool 403 are connected to the first arm 401, the bead seater tool 502 is connected to the second arm 501 and the bead breaker disc 602 is connected to the third arm 601 which is hinged to the body 301.

In the preferred embodiment, the first arm 401 comprises a first end 401a that is connected to the body 301 and a second end 401b that is connected to the mounting tool 403 and to the demounting tool 402.

In the preferred embodiment, the second arm 501 comprises a first end 501a that is connected to the working unit 302 and a second end 501b that is connected to the bead seater tool 502.

In the preferred embodiment, the third arm 601 comprises a first end 601a that is hinged to the body 301 and a second end 601b that is connected to the bead breaker disc 602.

The method may comprise a step of rotating the third arm 601 about a horizontal axis transverse to the first horizontal sliding axis X1 in order to tilt it between a rest position, where the bead breaker disc 602 is distal from the wheel R, and a working position, where the bead breaker disc 602 is oriented towards the wheel R.

The method also comprises a step of moving the tool holder carriage 300 along the slideway 101 from a rest position, where it is away from the wheel-holder unit 200, to a working position where it is close to the wheel-holder unit 200 from above to operate on the wheel R. To demount the tyre P, the step of moving the tool holder carriage 300 is carried out after the step of rotating the third arm 601 to bring the bead breaker disc 502 into contact with the tyre P. After that, the wheel-holder unit 200 is activated and the method comprises a step of detaching in which the tool holder carriage 300 is lowered further along the slideway 101 so that the bead breaker disc 602 is inserted further in between bead of the tyre P and the rim C.

In this situation, the bead breaker disc 602 separates the tyre P from the rim C by detaching the vulcanized rubber from the rim C.

Next, the tool holder carriage 300 is raised to the rest position and the third arm 601 is tilted to the rest position.

The method then comprises a step of moving the first arm 401 along a first horizontal sliding axis X1 between a rest position, where it is retracted towards the column 100, and a working position, where it is extracted away from the column 100 so that the demounting tool 402 is inserted between the bead of the tyre P and the annular edge of the rim C.

The method may also comprise a step of moving the second arm 501 along a second horizontal sliding axis X2 that is spaced from the first horizontal sliding axis X1, between a rest position, where it is retracted towards the column 100, and a working position, where it is extracted away from the column 100 so that the bead seater tool 502 can operate on the sidewall of the tyre P to apply a flattening pressure thereon. Once the second arm 501 has been brought to the working position, the method may further comprise a step of moving the working unit 302 vertically in translation relative to the body 301. In this step, the second arm 501 is lowered towards the sidewall of the tyre P.

After that, the tool holder carriage 300 is moved to the working position so that the bead seater tool 502 engages the sidewall of the tyre P and presses it to allow the demounting tool 402 to be inserted between the tyre P and the rim C.

In this situation, thanks to the flattening pressure applied on the tyre P by the bead seater tool 502, the sidewall of the tyre P is separated at least partly from the rim C, thereby allowing the demounting tool 402 to be easily inserted between the tyre P and the rim C.

After the demounting tool 402 has been inserted, the method comprises a further step of moving the working unit 302 vertically in translation relative to the body 301. In this step, the second arm 501 is raised to move the bead seater tool 502 away from the sidewall of the tyre P. Next, the method comprises a step of moving the second arm 501 in translation to the rest position.

Advantageously, the fact that the second arm 501 is lowered/raised by the working unit 302 before being moved from the rest position to the working position or vice versa prevents the bead seater tool 502 from scraping the tyre P.

After the step of moving the second arm 501 towards the rest position, the method comprises a step of setting the wheel-holder unit 200 in rotation so that the demounting tool 402 can pull the upper bead of the tyre P out of the rim C.

If a new tyre P then has to be mounted to the rim C, the tool holder carriage 300 is brought to the rest position, the third arm 601 is held at the rest position and the first arm 401 is made to slide along the first horizontal sliding axis X1 towards the working position. In this situation, in the preferred embodiment, the method comprises a step of rotating the first arm 401 about the first horizontal axis of translation X1 so as to make the mounting tool 403 confront the wheel R.

The method also comprises a step of moving the second arm 501 along the second horizontal axis of translation X2 from the rest position to the working position. In this situation, the first and the second arms 401, 501 are at the working position, while the third arm 601 is at the rest position.

In this situation, the method comprises a step of moving the tool holder carriage 300 to the working position, followed by a step of moving the second arm 501 vertically in translation relative to the tool holder carriage 300 downwards towards the tyre P so that the bead seater tool 502 presses down on the sidewall of the tyre P.

In this situation, the mounting tool 403 is placed between the tyre P and the edge of the rim C, while the bead seater tool 502 is engaged on the sidewall of the tyre P.

Next, the method comprises a step of activating the wheel-holder unit 200 and, if necessary, a step of moving the working unit 302, hence the second arm 501 in translation (up and down) in such a way as to adjust the flattening position in which the bead seater tool 502 acts on the tyre P to insert the upper bead of the tyre into the rim C.

After the tyre P has been inserted into the rim C, the tool holder carriage 300 is returned to the rest position.

This invention overcomes the disadvantages of the prior art.

More specifically, this invention provides a machine that is precise and reliable in mounting and demounting a tyre relative to a corresponding vehicle wheel rim.

Advantageously, the machine is also highly versatile and easy to use. In particular, the machine allows mounting two tools on the first arm and, on the third arm, an additional tool selectable from a demounting tool, a mounting tool and a bead breaker disc.

Allowing the arms to be moved independently of each other makes mounting and demounting the tyre quicker and easier. In particular, the possibility of moving the second arm even when the first arm is in operation allows using the bead seater tool to make it easier, when demounting, to insert the demounting tool between the tyre and the rim and, when mounting, to insert the tyre into the rim.

This invention also provides a particularly efficient and reliable method for performing a service on a vehicle wheel.

## Claims

1. A machine (M) for mounting and demounting a tyre (P) relative to a corresponding rim (C) of a vehicle wheel (R), comprising:
- a column (100) including a slideway (101) extending along a vertical direction (W);
- a wheel-holder unit (200) rotating about an axis of rotation (Y), parallel to the vertical direction (W);
- a tool holder carriage (300) that is movable along the slideway (101) between a working position where it is close to the wheel-holder unit (200) from above to operate on the wheel (R) and a rest position, where it is away from the wheel-holder unit (200), wherein the tool holder carriage (300) includes:
a mounting tool (403), configured to be inserted between a bead of the tyre (P) and an annular edge of the wheel rim (C) in order to mount the tyre;
a first arm (401);
a demounting tool (402) connected to the first arm (401) and configured to be inserted between the bead of the tyre (P) and the annular edge of the rim (C) to demount the tyre, the first arm (401) being movable slidably along a first horizontal sliding axis (X1) between a rest position, where it is retracted towards the column (100), and a working position, where it is extracted away from the column (100);
a second arm (501);
a bead seater tool (502), connected to the second arm (501) and configured to operate on a sidewall of the tyre (P) to apply a flattening pressure thereon;
a third arm (601);
a bead breaker disc (602) connected to the third arm (601);
**characterized in that** the second arm (501) is slidably movable along a second horizontal sliding axis (X2), spaced from the first horizontal sliding axis (X1), between a rest position, where it is retracted towards the column (100), and a working position, where it is extracted away from the column (100).

2. The machine according to claim 1, wherein the tool holder carriage (300) includes a body (301) and a working unit (302) that is movably coupled to the body (301) to move vertically relative thereto in translation along a movement axis (Z), and wherein the second arm (501) is associated with the working unit (302).

3. The machine according to claim 2, comprising an actuator (700) configured to move the working unit (302) relative to the body (301).

4. The machine according to any one of the preceding claims, wherein the mounting tool (403) is connected to the first arm (401) and wherein the mounting tool (403) and the demounting tool (402) are configured to be inserted alternately between a bead of the tyre (P) and an annular edge of the rim (C).

5. The machine according to claim 4, wherein the third arm (601) is movable by rotation about a horizontal axis transverse to the first horizontal sliding axis (X1) in order to tilt it between a rest position, where the bead breaker disc (602) is distal from the wheel (R) and a working position, where the bead breaker disc (602) is proximal to the wheel (R).

6. The machine according claim 4 or 5, wherein the third arm (601) moves in a vertical plane (γ) that includes the first horizontal sliding axis (X1) of the first arm (401) and the axis of rotation (Y) of the wheel-holder unit (200).

7. The machine according to any one of the preceding claims, wherein one or more of the following conditions is verified:
i) the bead breaker disc (602), when it at the rest position, is located above the demounting and mounting tools (402, 403) positioned at the respective rest positions;
ii) the first arm (401) comprises a first end (401a) that is connected to a body (301) of the tool holder carriage (300) and a second end (401b) where the mounting and demounting tools (403, 402) are mounted opposite to each other, the first arm (401) being movable in rotation about the first horizontal sliding axis (X1) in such a way as to orient the mounting and demounting tools (403, 402) alternately towards the wheel (R) to define respective operating configurations;
iii) the machine comprises a distributor device (603), integral with the third arm (601) and configured to deliver a lubricating substance when the third arm (601) is at the working position;
iv) the bead seater tool (502) comprises a substantially frustoconical disc whose lateral surface is shaped to engage the sidewall of the tyre (P).

8. The machine according to any one of the preceding claims, wherein the wheel-holder unit (200) is movable in translation towards and away from the column (100) along a horizontal axis of translation (X3), the horizontal axis of translation (X3) being aligned with the first horizontal sliding axis (X1).

9. The machine according to claim 8, comprising:
- a first hydraulic actuator that is configured to move the wheel-holder unit (200) in translation; and/or
- a second hydraulic actuator that is configured to move the tool holder carriage (300) along the sliding guide (101).

10. The machine according to any one of the preceding claims, further comprising:
- an upper arm (800), extending above the wheel-holder unit (200) between a first end (800a) that is operatively connected to the column (101), and a second end (800b);
- a sidewall pressing tool (801), connected to the second end (800b) of the upper arm (800) and configured to engage a sidewall of the tyre (P) during mounting of the tyre (P) to the rim (C).

11. The machine according to any one of the preceding claims, comprising, for each of both the first and the second arm (401, 501), an actuator that is configured to move the arm (401, 501) from the respective working position to the rest position and vice versa, and a control unit that is configured to allow these actuators to be selectively activated.

12. The machine according to claim 11, further comprising an actuator that is configured to move the third arm (601) from a working position to a rest position and vice versa, and wherein the control unit is configured to activate the actuator of the first arm (401) and the actuator of the third arm (601) alternately so that when the first arm (401) is at the working position, the third arm (601) is at the respective rest position and vice versa.

13. A method for performing a service on a vehicle wheel (R), comprising the following steps:
- preparing a machine (M) for mounting and demounting a tyre (P) relative to a corresponding rim (C) of a vehicle wheel (R), the machine (M) comprising:
a column (100) including a slideway (101) extending along a vertical direction (W);
a wheel-holder unit (200) rotating about an axis of rotation (Y), parallel to the vertical direction (W);
a tool holder carriage (300) comprising a mounting tool (403) a first arm (401), a second arm (501) and a third arm (601);
a demounting tool (402) connected to the first arm (401);
- a bead seater tool (502) connected to the second arm (501);
- a bead breaker disc (602) connected to the third arm (601);
wherein the method comprises the following steps:
- moving the tool holder carriage (300) along the slideway (101) from a rest position, where it is away from the wheel-holder unit (200), to a working position where it is close to the wheel-holder unit (200) from above to operate on the wheel (R);
- moving the first arm (401) along a first horizontal sliding axis (X1) between a rest position, where it is retracted towards the column (100), and a working position, where it is extracted away from the column (100) so that one between the demounting tool (403) and the mounting tool (402) is inserted between the bead of the tyre (P) and an annular edge of the rim (C),
the method being **characterized in that** it further comprises a step of moving the second arm (501) along a second horizontal sliding axis (X2) that is spaced from the first horizontal sliding axis (X1), between a rest position, where it is retracted towards the column (100), and a working position, where it is extracted away from the column (100) so that the bead seater tool (502) can operate on a sidewall of the tyre (P) to apply a flattening pressure thereon.

14. The method according to claim 13, wherein the tool holder carriage (300) includes a body (301) that is slidably coupled to the slideway (101) and a working unit (302) that is movably coupled to the body (301), wherein a first end (501a) of the second arm (501) is connected to the working unit (302) and a second end (501b) of the second arm (501) is connected to the bead seater tool (502), the method further comprising a step of moving the working unit (302) vertically in translation relative to the body (301) to cause the bead seater tool (502) to come into abutment against the sidewall of the tyre (P) or to move the bead seater tool (502) away from the sidewall.

15. The method according to claim 13 or 14, wherein the mounting tool (403) is connected to the first arm (401) and the third arm (601) is hinged to a body (301) of the tool holder carriage (300), the method comprising a step of rotating the third arm (601) about a horizontal axis transverse to the first horizontal sliding axis (X1) in order to tilt it between a rest position, where the bead breaker disc (602) is distal from the wheel (R), and a working position, where the bead breaker disc (602) is proximal to the wheel (R).

## Patentansprüche

1. Maschine (M) zur Montage und Demontage eines Reifens (P) in Bezug auf eine entsprechende Felge (C) eines Fahrzeugrades (R), umfassend:
- eine Säule (100), einschließend eine Gleitbahn (101), die sich entlang einer vertikalen Richtung (W) erstreckt;
- eine Radhaltereinheit (200), die sich um eine Drehachse (Y) parallel zur vertikalen Richtung (W) dreht;
- einen Werkzeughalterschlitten (300), der entlang der Gleitbahn (101) zwischen einer Arbeitsposition, in der er sich in der Nähe der Radhaltereinheit (200) von oben befindet, um auf das Rad (R) zu wirken, und einer Ruheposition, in der er von der Radhaltereinheit (200) entfernt ist, bewegbar ist, wobei der Werkzeughalterschlitten (300) Folgendes einschließt:
ein Montagewerkzeug (403), das dazu ausgelegt ist, zwischen einem Wulst des Reifens (P) und einem ringförmigen Rand der Radfelge (C) eingeführt zu werden, um den Reifen zu montieren;
einen ersten Arm (401);
ein Demontagewerkzeug (402), das mit dem ersten Arm (401) verbunden und dazu ausgelegt ist, zwischen dem Wulst des Reifens (P) und dem ringförmigen Rand der Felge (C) eingeführt zu werden, um den Reifen zu demontieren, wobei der erste Arm (401) entlang einer ersten horizontalen Gleitachse (X1) zwischen einer Ruheposition, in der er in Richtung der Säule (100) zurückgezogen ist, und einer Arbeitsposition, in der er von der Säule (100) weggezogen ist, gleitend bewegbar ist;
einen zweiten Arm (501);
ein Wulstsitzwerkzeug (502), das mit dem zweiten Arm (501) verbunden und dazu ausgelegt ist, an einer Seitenwand des Reifens (P) zu wirken, um einen Abflachungsdruck darauf auszuüben;
einen dritten Arm (601);
eine Wulstabdrückscheibe (602), die mit dem dritten Arm (601) verbunden ist;
**dadurch gekennzeichnet, dass** der zweite Arm (501) entlang einer zweiten horizontalen Gleitachse (X2), die von der ersten horizontalen Gleitachse (X1) beabstandet ist, zwischen einer Ruheposition, in der er in Richtung der Säule (100) zurückgezogen ist, und einer Arbeitsposition, in der er von der Säule (100) weggezogen ist, gleitend bewegbar ist.

2. Maschine nach Anspruch 1, wobei der Werkzeughalterschlitten (300) einen Körper (301) und eine Arbeitseinheit (302) einschließt, die beweglich mit dem Körper (301) gekoppelt ist, um sich vertikal in Bezug darauf translatorisch entlang einer Bewegungsachse (Z) zu bewegen, und wobei der zweite Arm (501) mit der Arbeitseinheit (302) assoziiert ist.

3. Maschine nach Anspruch 2, umfassend einen Aktor (700), der ausgelegt ist, um die Arbeitseinheit (302) in Bezug auf den Körper (301) zu bewegen.

4. Maschine nach einem der vorhergehenden Ansprüche, wobei das Montagewerkzeug (403) mit dem ersten Arm (401) verbunden ist und wobei das Montagewerkzeug (403) und das Demontagewerkzeug (402) dazu ausgelegt sind, abwechselnd zwischen einem Wulst des Reifens (P) und einem ringförmigen Rand der Felge (C) eingeführt zu werden.

5. Maschine nach Anspruch 4, wobei der dritte Arm (601) durch Drehung um eine horizontale Achse quer zu der ersten horizontalen Gleitachse (X1) bewegbar ist, um ihn zwischen einer Ruheposition, in der die Wulstabdrückscheibe (602) distal von dem Rad (R) ist, und einer Arbeitsposition, in der die Wulstabdrückscheibe (602) proximal zu dem Rad (R) ist, zu kippen.

6. Maschine nach Anspruch 4 oder 5, wobei sich der dritte Arm (601) in einer vertikalen Ebene (γ) bewegt, die die erste horizontale Gleitachse (X1) des ersten Arms (401) und die Drehachse (Y) der Radhaltereinheit (200) einschließt.

7. Maschine nach einem der vorhergehenden Ansprüche, wobei eine oder mehrere der folgenden Bedingungen stattfinden:
i) die Wulstabdrückscheibe (602), wenn sie sich in der Ruheposition befindet, sich über den Demontage- und Montagewerkzeugen (402, 403) befindet, die an den jeweiligen Ruhepositionen positioniert sind;
ii) der erste Arm (401) ein erstes Ende (401a), das mit einem Körper (301) des Werkzeughalterschlittens (300) verbunden ist, und ein zweites Ende (401b) umfasst, an dem die Montage- und Demontagewerkzeuge (403, 402) einander gegenüberliegend montiert sind, wobei der erste Arm (401) in Drehung um die erste horizontale Gleitachse (X1) bewegbar ist, um die Montage- und Demontagewerkzeuge (403, 402) abwechselnd hinführend zum Rad (R) zu orientieren, um jeweilige Betriebsauslegungen zu definieren;
iii) die Maschine eine Verteilervorrichtung (603) umfasst, die mit dem dritten Arm (601) einstückig ausgebildet ist und dazu ausgelegt ist, eine Schmiersubstanz abzugeben, wenn sich der dritte Arm (601) in der Arbeitsposition befindet;
iv) das Wulstsitzwerkzeug (502) eine im Wesentlichen kegelstumpfförmige Scheibe umfasst, deren Seitenfläche so geformt ist, dass sie in die Seitenwand des Reifens (P) eingreift.

8. Maschine nach einem der vorhergehenden Ansprüche, wobei die Radhaltereinheit (200) translatorisch zu/von der Säule (100) hin- und wegführend entlang einer horizontalen Translationsachse (X3) bewegbar ist, wobei die horizontale Translationsachse (X3) mit der ersten horizontalen Gleitachse (X1) ausgerichtet ist.

9. Maschine nach Anspruch 8, umfassend:
- einen ersten hydraulischen Aktor, der ausgelegt ist, um die Radhaltereinheit (200) translatorisch zu bewegen; und/oder
- einen zweiten hydraulischen Aktor, der ausgelegt ist, um den Werkzeughalterschlitten (300) entlang der Gleitführung (101) zu bewegen.

10. Maschine nach einem der vorhergehenden Ansprüche, ferner umfassend:
- einen oberen Arm (800), der sich über der Radhaltereinheit (200) zwischen einem ersten Ende (800a), das mit der Säule (101) betriebswirksam verbunden ist, und einem zweiten Ende (800b) erstreckt;
- ein Seitenwandpresswerkzeug (801), das mit dem zweiten Ende (800b) des oberen Arms (800) verbunden und dazu ausgelegt ist, während der Montage des Reifens (P) an der Felge (C) mit einer Seitenwand des Reifens (P) in Eingriff zu treten.

11. Maschine nach einem der vorhergehenden Ansprüche, umfassend für jeweils sowohl den ersten als auch den zweiten Arm (401, 501) jeweils einen Aktor, der ausgelegt ist, um den Arm (401, 501) von der jeweiligen Arbeitsposition in die Ruheposition und umgekehrt zu bewegen, und eine Steuereinheit, die ausgelegt ist, um zu ermöglichen, dass diese Aktoren selektiv aktiviert werden.

12. Maschine nach Anspruch 11, ferner umfassend einen Aktor, der ausgelegt ist, um den dritten Arm (601) von einer Arbeitsposition in eine Ruheposition und umgekehrt zu bewegen, und wobei die Steuereinheit ausgelegt ist, um den Aktor des ersten Arms (401) und den Aktor des dritten Arms (601) abwechselnd zu aktivieren, so dass, wenn sich der erste Arm (401) in der Arbeitsposition befindet, sich der dritte Arm (601) in der jeweiligen Ruheposition und umgekehrt befindet.

13. Verfahren zur Durchführung einer Wartung an einem Fahrzeugrad (R), umfassend die folgenden Schritte:
- Vorbereiten einer Maschine (M) zur Montage und Demontage eines Reifens (P) in Bezug auf eine entsprechende Felge (C) eines Fahrzeugrades (R), wobei die Maschine (M) Folgendes umfasst:
eine Säule (100), einschließend eine Gleitbahn (101), die sich entlang einer vertikalen Richtung (W) erstreckt;
eine Radhaltereinheit (200), die sich um eine Drehachse (Y) parallel zur vertikalen Richtung (W) dreht;
einen Werkzeughalterschlitten (300), der ein Montagewerkzeug (403), einen ersten Arm (401), einen zweiten Arm (501) und einen dritten Arm (601) umfasst;
ein Demontagewerkzeug (402), das mit dem ersten Arm (401) verbunden ist;
- ein Wulstsitzwerkzeug (502), das mit dem zweiten Arm (501) verbunden ist;
- eine Wulstabdrückscheibe (602), die mit dem dritten Arm (601) verbunden ist;
wobei das Verfahren die folgenden Schritte umfasst:
- Bewegen des Werkzeughalterschlittens (300) entlang der Gleitbahn (101) von einer Ruheposition, in der er von der Radhaltereinheit (200) entfernt ist, in eine Arbeitsposition, in der er sich von oben in der Nähe der Radhaltereinheit (200) befindet, um auf das Rad (R) zu wirken;
- Bewegen des ersten Arms (401) entlang einer ersten horizontalen Gleitachse (X1) zwischen einer Ruheposition, in der er in Richtung der Säule (100) zurückgezogen ist, und einer Arbeitsposition, in der er von der Säule (100) weggezogen ist, so dass eine zwischen dem Demontagewerkzeug (403) und dem Montagewerkzeug (402) zwischen dem Wulst des Reifens (P) und einem ringförmigen Rand der Felge (C) eingefügt wird,
wobei das Verfahren **dadurch gekennzeichnet ist, dass** es ferner einen Schritt zum Bewegen des zweiten Arms (501) entlang einer zweiten horizontalen Gleitachse (X2), die von der ersten horizontalen Gleitachse (X1) beabstandet ist, zwischen einer Ruheposition, in der er in Richtung der Säule (100) zurückgezogen ist, und einer Arbeitsposition, in der er von der Säule (100) weggezogen ist, umfasst, so dass das Wulstsitzwerkzeug (502) an einer Seitenwand des Reifens (P) wirken kann, um einen Abflachungsdruck darauf auszuüben.

14. Verfahren nach Anspruch 13, wobei der Werkzeughalterschlitten (300) einen Körper (301), der gleitend mit der Gleitbahn (101) gekoppelt ist, und eine Arbeitseinheit (302), die beweglich mit dem Körper (301) gekoppelt ist, einschließt, wobei ein erstes Ende (501a) des zweiten Arms (501) mit der Arbeitseinheit (302) verbunden ist und ein zweites Ende (501b) des zweiten Arms (501) mit dem Wulstsitzwerkzeug (502) verbunden ist, wobei das Verfahren ferner einen Schritt zum Bewegen der Arbeitseinheit (302) vertikal translatorisch in Bezug auf den Körper (301) umfasst, um zu bewirken, dass das Wulstsitzwerkzeug (502) gegen die Seitenwand des Reifens (P) in Anlage kommt oder um das Wulstsitzwerkzeug (502) von der Seitenwand wegführend zu bewegen.

15. Verfahren nach Anspruch 13 oder 14, wobei das Montagewerkzeug (403) mit dem ersten Arm (401) verbunden ist und der dritte Arm (601) an einem Körper (301) des Werkzeughalterschlittens (300) angelenkt ist, wobei das Verfahren einen Schritt zum Drehen des dritten Arms (601) um eine horizontale Achse quer zu der ersten horizontalen Gleitachse (X1) umfasst, um ihn zwischen einer Ruheposition, in der die Wulstabdrückscheibe (602) distal von dem Rad (R) ist, und einer Arbeitsposition, in der die Wulstabdrückscheibe (602) proximal zu dem Rad (R) ist, zu kippen.

## Revendications

1. Machine (M) de montage et de démontage d'un pneumatique (P) par rapport à une jante (C) correspondante d'une roue (R) de véhicule, comprenant :
- une colonne (100) incluant une glissière (101) s'étendant le long d'une direction verticale (W) ;
- une unité de support de roue (200), tournant autour d'un axe de rotation (Y), parallèle à la direction verticale (W) ;
- un chariot porte-outils (300) étant mobile le long de la glissière (101) entre une position de travail où il est proche de l'unité de support de roue (200) par le dessus pour agir sur la roue (R) et une position de repos, où il est éloigné de l'unité de support de roue (200), dans laquelle le chariot porte-outils (300) inclut :
un outil de montage (403), configuré pour être inséré entre un talon du pneumatique (P) et un bord annulaire de la jante (C) afin de monter le pneumatique ;
un premier bras (401) ;
un outil de démontage (402) relié au premier bras (401) et configuré pour être inséré entre le talon du pneumatique (P) et le bord annulaire de la jante (C) afin de démonter le pneumatique, le premier bras (401) étant mobile de façon coulissante le long d'un premier axe (X1) de coulissement horizontal entre une position de repos, où il est rétracté vers la colonne (100), et une position de travail, où il est extrait en s'éloignant de la colonne (100) ;
un deuxième bras (501) ;
un outil (502) de portée de talon, relié au deuxième bras (501) et configuré pour agir sur un flanc du pneumatique (P) afin d'y appliquer une pression d'aplatissement ;
un troisième bras (601) ;
un disque (602) démonte-talons relié au troisième bras (601) ;
**caractérisée en ce que** le deuxième bras (501) est mobile de façon coulissante le long d'un deuxième axe (X2) de coulissement horizontal, espacé du premier axe (X1) de coulissement horizontal, entre une position de repos, où il est rétracté vers la colonne (100), et une position de travail, où il est extrait en s'éloignant de la colonne (100).

2. Machine selon la revendication 1, dans laquelle le chariot porte-outils (300) inclut un corps (301) et une unité de travail (302) qui est couplée de manière mobile au corps (301) pour se déplacer verticalement par rapport à celui-ci en translation le long d'un axe de mouvement (Z), et dans laquelle le deuxième bras (501) est associé à l'unité de travail (302).

3. Machine selon la revendication 2, comprenant un actionneur (700) configuré pour déplacer l'unité de travail (302) par rapport au corps (301).

4. Machine selon l'une quelconque des revendications précédentes, dans laquelle l'outil de montage (403) est relié au premier bras (401) et dans laquelle l'outil de montage (403) et l'outil de démontage (402) sont configurés pour être insérés alternativement entre un talon du pneumatique (P) et un bord annulaire de la jante (C) .

5. Machine selon la revendication 4, dans laquelle le troisième bras (601) est mobile par rotation autour d'un axe horizontal transversal au premier axe (X1) de coulissement horizontal afin de le faire basculer entre une position de repos, où le disque (602) démonte-talons est distal de la roue (R) et une position de travail, où le disque (602) démonte-talons est proximal de la roue (R) .

6. Machine selon la revendication 4 ou 5, dans laquelle le troisième bras (601) se déplace dans un plan vertical (γ) qui inclut le premier axe (X1) de coulissement horizontal du premier bras (401) et l'axe de rotation (Y) de l'unité de support de roue (200).

7. Machine selon l'une quelconque des revendications précédentes, dans laquelle une ou plusieurs des conditions suivantes sont vérifiées :
i) le disque (602) démonte-talons, lorsqu'il est en position de repos, est situé au-dessus des outils de démontage et de montage (402, 403) positionnés aux positions de repos respectives ;
ii) le premier bras (401) comprend une première extrémité (401a) qui est reliée à un corps (301) du chariot porte-outils (300) et une deuxième extrémité (401b) où les outils de montage et de démontage (403, 402) sont montés en opposition les uns par rapport aux autres, le premier bras (401) étant mobile en rotation autour du premier axe (X1) horizontal de coulissement de manière à orienter les outils de montage et de démontage (403, 402) alternativement vers la roue (R) pour définir des configurations de fonctionnement respectives ;
iii) la machine comprend un dispositif distributeur (603), solidaire du troisième bras (601) et configuré pour délivrer une substance lubrifiante lorsque le troisième bras (601) est en position de travail ;
iv) l'outil (502) de portée de talon comprend un disque sensiblement tronconique dont la surface latérale est formée pour se mettre en prise avec le flanc du pneumatique (P).

8. Machine selon l'une quelconque des revendications précédentes, dans laquelle l'unité de support de roue (200) est mobile en translation en direction et en s'éloignant de la colonne (100) le long d'un axe (X3) de translation horizontal, l'axe (X3) de translation horizontal étant aligné avec le premier axe (X1) de coulissement horizontal.

9. Machine selon la revendication 8, comprenant :
- un premier actionneur hydraulique étant configuré pour déplacer l'unité de support de roue (200) en translation ; et/ou
- un deuxième actionneur hydraulique étant configuré pour déplacer le chariot porte-outils (300) le long du guide coulissant (101).

10. Machine selon l'une quelconque des revendications précédentes, comprenant de plus :
- un bras supérieur (800), s'étendant au-dessus de l'unité de support de roue (200) entre une première extrémité (800a) étant reliée de manière fonctionnelle à la colonne (101), et une deuxième extrémité (800b) ;
- un outil de pression (801) de flanc, relié à la deuxième extrémité (800b) du bras supérieur (800) et configuré pour mettre en prise un flanc du pneumatique (P) pendant le montage du pneumatique (P) sur la jante (C) .

11. Machine selon l'une quelconque des revendications précédentes, comprenant, pour chacun des premier et deuxième bras (401, 501), un actionneur configuré pour déplacer le bras (401, 501) de la position de travail respective à la position de repos et vice versa, et une unité de commande étant configurée pour permettre à ces actionneurs d'être sélectivement activés.

12. Machine selon la revendication 11, comprenant de plus un actionneur étant configuré pour déplacer le troisième bras (601) d'une position de travail à une position de repos et vice versa, et dans laquelle l'unité de commande est configurée pour activer l'actionneur du premier bras (401) et l'actionneur du troisième bras (601) alternativement de sorte que lorsque le premier bras (401) se trouve en position de travail, le troisième bras (601) se trouve dans la position de repos respective et vice versa.

13. Procédé pour effectuer un entretien sur une roue (R) de véhicule, comprenant les étapes suivantes :
- préparer une machine (M) de montage et de démontage d'un pneumatique (P) par rapport à une jante (C) correspondante d'une roue (R) de véhicule, la machine (M) comprenant :
une colonne (100), comprenant une glissière (101) s'étendant le long d'une direction verticale (W) ;
- une unité de support de roue (200), tournant autour d'un axe de rotation (Y), parallèle à la direction verticale (W) ;
un chariot porte-outils (300), comprenant un outil de montage (403), un premier bras (401), un deuxième bras (501) et un troisième bras (601) ;
un outil de démontage (402) relié au premier bras (401) ;
- un outil (502) de portée de talon relié au deuxième bras (501) ;
- un disque (602) démonte-talons relié au troisième bras (601) ;
dans lequel le procédé comprend les étapes suivantes :
- déplacer le chariot porte-outils (300) le long de la glissière (101) d'une position de repos, où il est éloigné de l'unité de support de roue (200), à une position de travail où il est proche de l'unité de support de roue (200) par le dessus pour agir sur la roue (R) ;
- déplacer le premier bras (401) le long d'un premier axe (X1) de coulissement horizontal entre une position de repos, où il est rétracté vers la colonne (100), et une position de travail, où il est extrait en s'éloignant de la colonne (100), de sorte qu'un outil de démontage (403) et un outil de montage (402) soient insérés entre le talon du pneumatique (P) et un bord annulaire de la jante (C),
le procédé étant **caractérisé en ce qu'**il comprend de plus une étape consistant à déplacer le deuxième bras (501) le long d'un deuxième axe (X2) de coulissement horizontal qui est espacé du premier axe (X1) de coulissement horizontal, entre une position de repos, dans laquelle il est rétracté vers la colonne (100), et une position de travail, dans laquelle il est extrait en s'éloignant de la colonne (100) afin que l'outil (502) de portée de talon puisse agir sur un flanc du pneumatique (P) pour y appliquer une pression d'aplatissement.

14. Procédé selon la revendication 13, dans lequel le chariot porte-outils (300) inclut un corps (301) qui est couplé de manière coulissante à la glissière (101) et une unité de travail (302) qui est couplée de manière mobile au corps (301), dans lequel une première extrémité (501a) du deuxième bras (501) est reliée à l'unité de travail (302) et une deuxième extrémité (501b) du deuxième bras (501) est reliée à l'outil (502) de portée de talon, le procédé comprenant de plus une étape consistant à déplacer l'unité de travail (302) verticalement en translation par rapport au corps (301) pour amener l'outil (502) de portée de talon en butée contre le flanc du pneumatique (P) ou pour éloigner l'outil (502) de portée de talon du flanc.

15. Procédé selon la revendication 13 ou 14, dans lequel l'outil de montage (403) est relié au premier bras (401) et le troisième bras (601) est monté articulé à un corps (301) du chariot porte-outils (300), le procédé comprenant une étape de rotation du troisième bras (601) autour d'un axe horizontal transversal au premier axe (X1) de coulissement horizontal afin de le faire basculer entre une position de repos, dans laquelle le disque (602) démonte-talons est éloigné de la roue (R), et une position de travail, dans laquelle le disque (602) démonte-talons est proximal par rapport à la roue (R).
